# EUROPEAN PATENT APPLICATION

(11) **EP 4 023 615 A1**
(43) Date of publication of application: **06.07.2022**
(21) Application number: 20908308.8
(22) Date of filing: 21.12.2020
(51) Int. Cl.: C03B 33/085, B26F 3/08, C03B 23/043, C03B 23/045, C03B 23/057

(54) **GLASS ARTICLE MANUFACTURING DEVICE AND GLASS ARTICLE MANUFACTURING METHOD**

(30) Priority: 25.12.2019 JP 2019233752
(71) Applicant: Nippon Electric Glass Co., Ltd., Otsu-shi Shiga 520-8639 (JP)
(72) Inventor: IWASAKI, Takanori, Otsu-shi, Shiga 520-8639 (JP); YONEZAWA, Takehiro, Otsu-shi, Shiga 520-8639 (JP); TANAKA, Taiki, Otsu-shi, Shiga 520-8639 (JP)
(74) Representative: Neuefeind, Regina
(86) International application number: PCT/JP2020/047585
(87) International publication number: WO 2021/132116

(57) **Abstract**

This glass article manufacturing device (11) is provided with a rotation mechanism (12) which rotates a glass tube (G1) and a heating device (14) which heats the glass tube (G1). In the glass article manufacturing device (11), a gripping mechanism (15) which grips the glass tube (G1) is moved by a movement mechanism (16) in the direction for pulling off the end of the glass tube (G1), thereby fuse-cutting the glass tube (G1). By fusion-cutting the glass tube (G1) during operation of a blowing device (17) that blows air towards the inside of the glass tube (G1), the glass article manufacturing device (11) ensures an open state of the end surface formed by fusion-cutting of the glass tube (G1).

## Description

### TECHNICAL FIELD

The present invention relates to an apparatus for manufacturing a glass article and a method for manufacturing a glass article.

### BACKGROUND ART

Patent Document 1 discloses an apparatus for manufacturing a glass article having a closed end surface. The manufacturing apparatus includes a heating device, a transporting device, and a drawing device. The heating device heats an open end of a glass tube. The transporting device transports the glass tube while rotating the glass tube about its tube axis. The drawing device draws out the end of the glass tube. Patent Document 2 discloses a known glass article that is cut out over a predetermined length from a glass tube and then undergoes fire polishing that heats the cut end surface with a burner or the like.

### PRIOR ART LITERATURE

### PATENT LITERATURE

Patent Document 1: Japanese National Phase Laid-Open Patent Publication No. 2015-535794
Patent Document 2: Japanese Laid-Open Patent Publication No. 2002-274872

### SUMMARY OF THE INVENTION

### PROBLEMS THAT THE INVENTION IS TO SOLVE

The glass article manufacturing apparatus of Patent Document 1 is dedicated for manufacturing a glass article having a closed end surface. Thus, another dedicated apparatus would be required, for example, to manufacture a glass article that is cut out over a predetermined length from a glass tube and then undergoes fire polishing of the cut end surface.

The present invention is made in view of such circumstances, and an objective of the present invention is to provide an apparatus for manufacturing a glass article and a method for manufacturing a glass article that allow heat-processing that closes a melt-cut end surface and heat-processing that opens a melt-cut end surface to be performed with the same apparatus.

### MEANS FOR SOLVING THE PROBLEMS

An apparatus that solves the above problem is for manufacturing a glass article obtained by heat-processing a glass tube that includes an opening in at least one of two ends. The apparatus includes a rotation mechanism, a heating device, a gripping mechanism, a movement mechanism, and a blower. The rotation mechanism rotates the glass tube about a tube axis. The heating device heats a portion of the glass tube located toward an end of the glass tube rotated by the rotation mechanism. The gripping mechanism grips the end of the glass tube heated by the heating device. The movement mechanism moves the gripping mechanism back and forth in a tube-axis direction of the glass tube. The blower blows air into the glass tube. The glass tube is melt-cut by moving the gripping mechanism, which is gripping the end of the glass tube, with the movement mechanism in a direction that pulls off the end of the glass tube. The glass tube is melt-cut while the blower is operating to form an opening in a melt-cut end surface of the glass tube.

This configuration forms an opening in the melt-cut end surface of the glass tube by melt-cutting the glass tube while the blower is operating. Further, this configuration closes the melt-cut end surface of the glass tube by melt-cutting the glass tube while operation of the blower is stopped.

Preferably, the glass article manufacturing apparatus is configured to be switchable between a first operation that forms an opening in the melt-cut end surface of the glass tube and a second operation that melt-cuts the glass tube while operation of the blower is stopped to close the melt-cut end surface of the glass tube.

In the glass article manufacturing apparatus, it is preferred that the glass tube include an opening in two ends. Further, the blower is one of two blowers that blow air into the glass tube from the two ends of the glass tube. Preferably, one of the two blowers sends air into the glass tube from one open end of the glass tube, and the other one of the two blowers sends air into the glass tube from the other open end of the glass tube.

This configuration generates airflows from the two open ends toward the central part of the glass tube and from the central part toward the two open ends of the glass tube. Thus, an opening is appropriately formed in the melt-cut end surfaces of the glass tube by the first operation using the blowers.

Preferably, the heating device is one of two heat devices, the gripping mechanism is one of two gripping mechanisms, and the movement mechanism is one of two movement mechanisms so that the two ends of the glass tube are simultaneously heat-processed. Preferably, one of the two heating devices heats the glass tube at a position proximate to one end of the glass tube, and the other one of the two heating devices heats the glass tube at a position proximate to the other end of the glass tube. Preferably, one of the gripping mechanisms grips one end of the glass tube, and the other one of the gripping mechanisms grips the other end of the glass tube. Preferably, one of the two movement mechanisms moves one of the two gripping mechanisms back and forth in the tube-axis direction of the glass tube, and the other one of the two movement mechanisms moves the other one of the two gripping mechanisms back and forth in the tube-axis direction of the glass tube.

This configuration efficiently heat-processes the two ends of the glass tube.

Preferably, the glass tube is one of a plurality of glass tubes, and the apparatus includes a structure that simultaneously heat-processes glass tubes.

This configuration efficiently obtains the glass articles.

In the glass article manufacturing apparatus, it is preferred that the gripping mechanism include a support member and a pressing member. The support member supports ends of the glass tubes. The pressing member presses the glass tubes toward the support member. The pressing member of the gripping mechanism includes pressing members respectively corresponding to the glass tubes.

With this configuration, the pressing members independently apply the gripping force of the gripping mechanism on the corresponding glass tubes. This limits, for example, influence by tolerance for the radial dimension of each glass tube. Thus, each glass tube is stably gripped by the gripping mechanism.

In the glass article manufacturing apparatus, the heating device may be a burner including a fuel gas nozzle.

In the glass article manufacturing apparatus, it is preferred that the fuel gas nozzle of the burner include a distal end portion having a width that is less than or equal to 25 mm.

This configuration allows the gripping mechanism to be located closer to the flame discharged from the fuel gas nozzle of the burner. Accordingly, the gripping mechanism can grip the glass tube at a position closer to the part where melt-cutting is to be performed. This shortens the length of the end of the glass tube gripped by the gripping mechanism, that is, the excess length of the glass tube.

In the glass article manufacturing apparatus, it is preferred that the distal end portion of the fuel gas nozzle of the burner have a projection length that is greater than or equal to 3 mm.

In the glass article manufacturing apparatus, it is preferred that the gripping mechanism grip the end of the glass tube in a range where a distance from the distal end portion of the burner is within 30 mm in the tube-axis direction.

A method for manufacturing a glass article using the above-described glass article manufacturing apparatus that obtains a glass article including an opening in a melt-cut end surface.

A method for manufacturing a glass article using the above-described glass article manufacturing apparatus that obtains a glass article including a closed melt-cut end surface.

### EFFECT OF THE INVENTION

The present invention allows the same apparatus to perform heat-processing that closes a melt-cut end surface and heat-processing that opens a melt-cut end surface.

### BRIEF DESCRIPTION OF DRAWINGS

Fig. 1 is a schematic side view of a glass article manufacturing apparatus in accordance with an embodiment.
Fig. 2 is a schematic front view showing part of the glass article manufacturing apparatus.
Fig. 3 is a schematic front view showing part of the glass article manufacturing apparatus.
Fig. 4 is a schematic side view showing part of the glass article manufacturing apparatus.
Fig. 5 is a schematic front view showing part of the glass article manufacturing apparatus.
Fig. 6 is a schematic side view illustrating operation of the glass article manufacturing apparatus.
Fig. 7 is a schematic side view illustrating operation of the glass article manufacturing apparatus.
Fig. 8 is a plan view of a glass article.
Fig. 9 is a schematic side view illustrating operation of the glass article manufacturing apparatus.
Fig. 10 is a schematic side view illustrating operation of the glass article manufacturing apparatus.
Fig. 11 is a plan view of a glass article.

### MODES FOR CARRYING OUT THE INVENTION

An embodiment of an apparatus for manufacturing a glass article and a method for manufacturing a glass article will now be described with reference to the drawings. To facilitate understanding, some of the elements may be illustrated in an exaggerated or simplified manner in the drawings. Further, elements may not be drawn to scale.

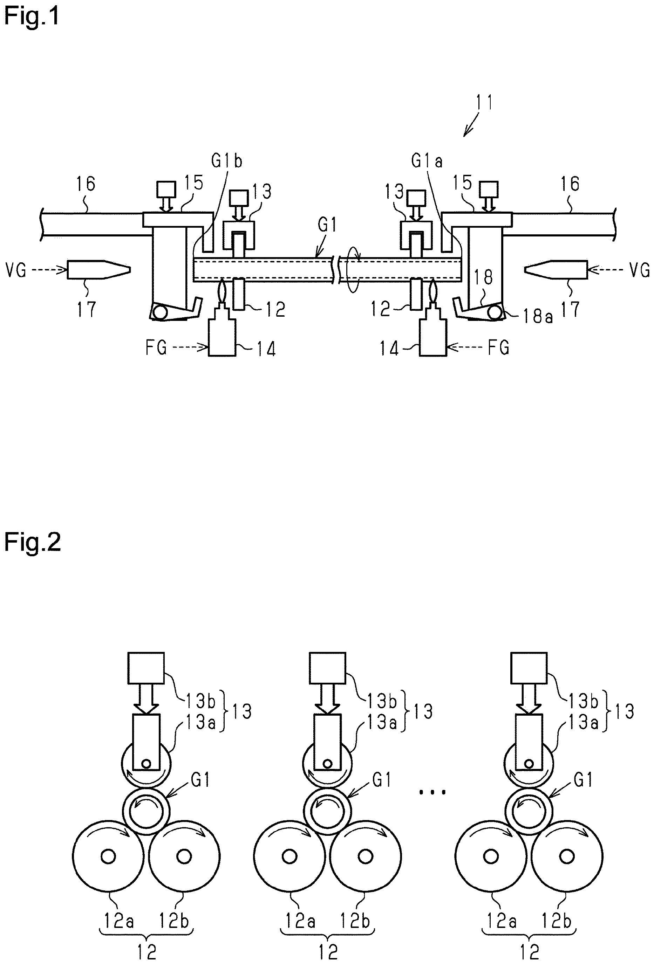

As shown in Fig. 1, a glass article manufacturing apparatus 11 is for manufacturing a glass article obtained by heat-processing a glass tube G1 that includes two open ends.

The glass article manufacturing apparatus 11 includes a rotation mechanism 12, a holding mechanism 13, and a heating device 14. The rotation mechanism 12 rotates the glass tube G1 about the tube axis. The holding mechanism 13 holds the glass tube G1, which is rotated by the rotation mechanism 12. The heating device 14 heats a portion of the glass tube G1 located toward an end of the glass tube G1, which is rotated by the rotation mechanism 12. The glass article manufacturing apparatus 11 further includes a gripping mechanism 15, a movement mechanism 16, and a blower 17. The gripping mechanism 15 grips the end of the glass tube G1, which is heated by the heating device 14. The movement mechanism 16 moves the gripping mechanism 15 back and forth in the tube-axis direction of the glass tube G1. The blower 17 blows air into the glass tube G1.

The glass article manufacturing apparatus 11 of the present embodiment is configured to heat-process the two ends of the glass tube G1 simultaneously. Specifically, the glass article manufacturing apparatus 11 includes two heating devices 14 that heat a first end G1a and a second end G1b of the glass tube G1, respectively. The glass article manufacturing apparatus 11 includes two gripping mechanisms 15 that respectively grip the first end G1a and the second end G1b of the glass tube G1 and two movement mechanisms 16 that respectively move the two gripping mechanisms 15. The glass article manufacturing apparatus 11 includes two blowers 17 that respectively blow air toward the openings in the first end G1a and the second end G1b of the glass tube G1. The glass article manufacturing apparatus 11 includes two rotation mechanisms 12 that respectively rotate the glass tube G1 at the first end G1a and the second end G1b. The glass article manufacturing apparatus 11 includes two holding mechanisms 13 that respectively hold the first end G1a and the second end G1b of the glass tube G1. The rotation mechanism 12 and the holding mechanism 13 may each have the same configuration when heat-processing one end of the glass tube G1 and when simultaneously heat-processing both ends of the glass tube G1.

Further, the glass article manufacturing apparatus 11 of the present embodiment is configured to heat-process a plurality of glass tubes G1 simultaneously.

As shown in Fig. 2, the rotation mechanism 12 of the glass article manufacturing apparatus 11 includes a first roller 12a and a second roller 12b. At least one of the first roller 12a and the second roller 12b is rotated and driven by a rotation driving unit (not shown). The glass tube G1 is supported by the first roller 12a and the second roller 12b and rotated following the rotated and driven rotors. The glass article manufacturing apparatus 11 includes a plurality of rotation mechanisms 12, the number of which corresponds to the number of glass tubes G1. The two rotation mechanisms 12 shown in Fig. 1 are set so that the first rollers 12a have the same rotational speed and/or the second rollers 12b have the same rotational speed.

The holding mechanism 13 of the glass article manufacturing apparatus 11 includes a holding roller 13a and a hold-biasing portion 13b. The holding roller 13a is arranged to sandwich the glass tube G1 with the two rollers of the rotation mechanism 12. The hold-biasing portion 13b biases the holding roller 13a toward the glass tube G1. The hold-biasing portion 13b may be, for example, a fluid pressure cylinder or an elastic body such as a compression spring. The holding mechanism 13 restricts movement of the glass tube G1 in the tube-axis direction and the radial direction. The glass article manufacturing apparatus 11 includes a plurality of holding mechanisms 13, the number of which corresponds to the number of glass tubes G1. The holding mechanisms 13 may be integrated with one another to press the glass tubes G1.

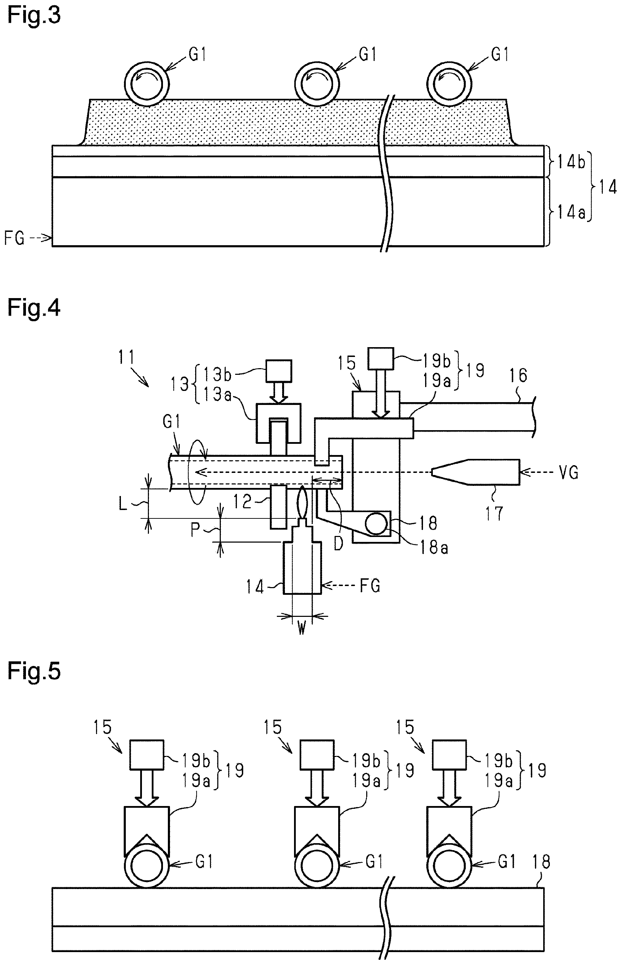

As shown in Figs. 3 and 4, the heating device 14 of the glass article manufacturing apparatus 11 is a burner. The burner includes a fuel gas nozzle that discharges fuel gas FG. The burner in the present embodiment is a line burner. In order to heat the glass tubes G1 simultaneously, the fuel gas nozzle extends in a longitudinal direction that is parallel to the arrangement direction of the glass tubes G1. The burner is configured to heat the glass tube G1 to a temperature that softens the glass tube G1.

The nozzle of the burner has a proximal end portion 14a and a distal end portion 14b. The distal end portion 14b of the fuel gas nozzle has the form of a thin projection projecting from the proximal end portion 14a. Further, the distal end portion 14b includes a step formed by an intermediate portion extending from the boundary with the proximal end portion 14a and an intermediate part between the boundary and the distal end portion 14b. The distal end side is narrower than the side closer to the proximal end portion 14a. That is, the distal end portion 14b includes a wide part adjacent to the proximal end portion 14a and a narrow part separated from the proximal end portion 14a.

Preferably, the distal end portion 14b of the fuel gas nozzle has a width W of less than or equal to 25 mm, further preferably, less than or equal to 10 mm, and even further preferably, less than or equal to 8 mm. The width W of the distal end portion 14b of the fuel gas nozzle is a dimension in the tube-axis direction of the glass tube G1 and corresponds to the maximum width. That is, the width W of the distal end portion 14b is the thickness of the wide part of the distal end portion 14b. The lower limit of width W in the distal end portion 14b of the fuel gas nozzle is, for example, 3 mm or greater. Preferably, the distal end portion 14b of the fuel gas nozzle has a projection length P that is greater than or equal to 3 mm, further preferably, greater than or equal to 5 mm, and even further preferably, greater than or equal to 20 mm. The upper limit of the projection length P of the distal end portion 14b of the fuel gas nozzle is, for example, 30 mm or less. Specifically, the projection length P of the distal end portion 14b is the total height of the wide part and the narrow part of the distal end portion 14b. Preferably, the length L between the distal end of the fuel gas nozzle and the glass tube G1 is, for example, in a range from 2 mm or greater to 20 mm or less. Preferably, the burner is arranged so that the flame is emitted from vertically below the glass tube G1.

The burner may premix fuel gas FG and air to perform combustion. Alternatively, the burner may perform combustion while diffusing and mixing fuel gas FG and air (nozzle mix method). The premix method may be a complete premix method in which the premixed air amount is greater than the theoretical air amount and a partial premix method in which the premixed air amount is less than the theoretical air amount. A mixed gas of a flammable gas and a combustion supporting gas is suitably used as fuel gas FG. A flammable gas is, for example, hydrogen, liquified petroleum gas (LPG), or liquified natural gas (LNG). A combustion supporting gas is, for example, oxygen.

As shown in Figs. 4 and 5, the gripping mechanism 15 of the glass article manufacturing apparatus 11 includes a support member 18 and a pressing member 19. The support member 18 supports the glass tube G1 from below. The pressing member 19 presses the glass tube G1 from above.

The support member 18 of the gripping mechanism 15 is configured to be movable to a support position, at which the support member 18 supports the glass tube G1 such that the tube-axis direction of the glass tube G1 is parallel to the horizontal direction, and a release position (refer to Fig. 1), when pivoted downward from the support position about a pivot shaft 18a, at which the support member 18 stops supporting the glass tube G1. The support member 18 in the present embodiment is pivotal toward and away from the glass tube G1. However, there is no limitation to such a structure. Specifically, the support member 18 may be vertically movable between the support position that supports the glass tube G1 and the release position that stops supporting the glass tube G1.

The pressing member 19 of the gripping mechanism 15 includes a pressing portion 19a and a press-biasing portion 19b. The pressing portion 19a includes a contact surface that contacts the glass tube G1. The press-biasing portion 19b biases the pressing portion 19a toward the glass tube G1. As shown in Fig. 5, the pressing portion 19a of the pressing member 19 includes a recess that receives the upper surface of the glass tube G1 in a state in which the tube-axis direction is parallel to the horizontal direction. The press-biasing portion 19b may be, for example, a fluid pressure cylinder or an elastic body such as a compression spring. The gripping mechanism 15 in the present embodiment includes a plurality of pressing members 19 that press the glass tubes G1, respectively. The glass tubes G1 are gripped by and sandwiched between one support member 18 and a plurality of pressing portions 19a, the number of which corresponds to the number of the glass tubes G1. The single support member 18 positions the lower ends of the glass tubes G1.

Preferably, the gripping mechanism 15 grips an end of the glass tube G1 in a range where the distance D from the distal end portion 14b of the burner is within 30 mm in the tube-axis direction. Specifically, it is preferred that the gripping mechanism 15 grip the glass tube G1 at a position at which the distance from where the glass tube G1 overlaps the wide part of the distal end portion 14b of the burner to the first end G1a or the second end G1b is 30 mm or less. The gripping mechanism 15 may include a plurality of support members 18 to respectively support the glass tubes G1. Furthermore, the pressing members 19 of the gripping mechanism 15 may be integrated with one another to press the glass tubes G1.

As shown in Figs. 1 and 4, the movement mechanism 16 of the glass article manufacturing apparatus 11 moves the gripping mechanism 15 back and forth in the tube-axis direction of the glass tube G1 (or horizontal direction). The movement mechanism 16 may be a known linear movement mechanism.

As shown in Fig. 1, the blower 17 of the glass article manufacturing apparatus 11 includes a blower nozzle that discharges blower gas VG. Air or an inert gas may be used as a suitable blower gas VG. The blower 17 includes a plurality of blower nozzles, the number of which corresponds to the number of the glass tubes G1. The blower 17 includes a valve (not shown). When the valve closes the flow passage of blower gas VG, the blower stops blowing air.

The glass article manufacturing apparatus 11 melt-cuts the glass tube G1 by moving the gripping mechanism 15, which is gripping an end of the glass tube G1, with the movement mechanism 16 in a direction that pulls off the end of the glass tube G1. The glass article manufacturing apparatus 11 is configured to be switchable between a first operation and a second operation. In the first operation of the glass article manufacturing apparatus 11, the glass tube G1 is melt-cut while the blower 17 is operating to form an opening in the melt-cut end surface of the glass tube G1. In the second operation of the glass article manufacturing apparatus 11, the glass tube G1 is melt-cut while operation of the blower 17 is stopped to close the melt-cut end surface of the glass tube G1. The glass article manufacturing apparatus 11 includes a controller (not shown). The controller includes storage, a processor, and the like. The storage stores programs of the first operation and the second operation. The processor executes the programs in accordance with the operation selected by the operator.

The operation of the glass article manufacturing apparatus 11 will now be described in detail together with the method for manufacturing a glass article.

The glass article manufacturing method includes a step of melt-cutting the glass tube G1. The glass tube G1 may be, for example, a tube cut out, over a predetermined length, from a straight tube formed from molten glass through the Danner process or the down-draw process (Vello process).

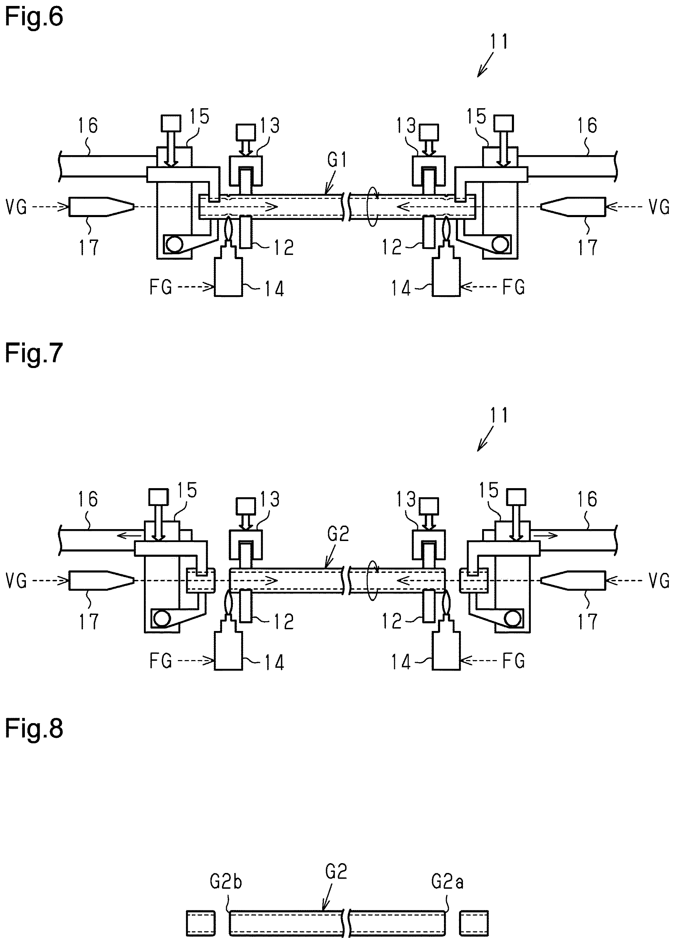

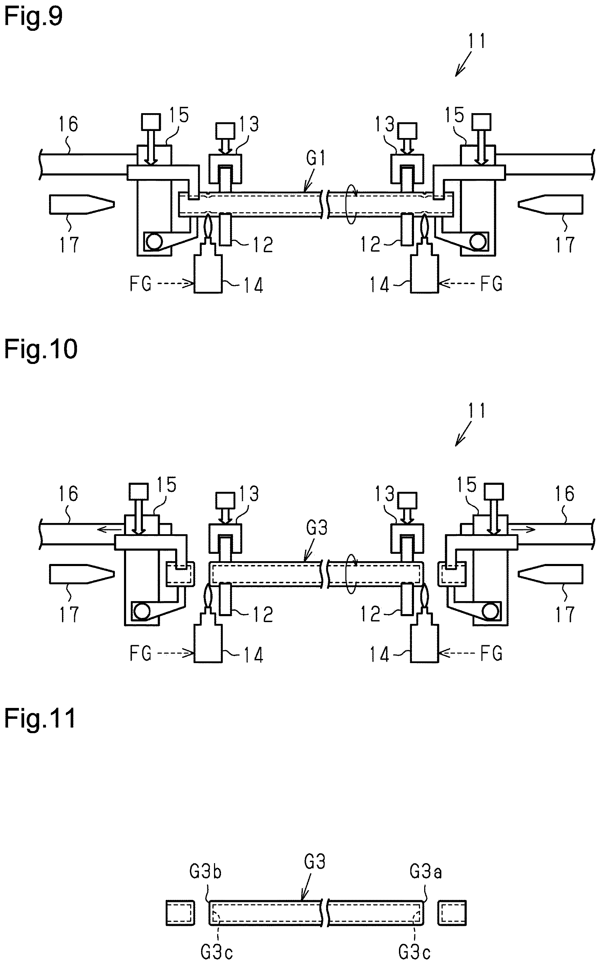

In the melt-cutting step of the glass article manufacturing method, as shown in Fig. 1, the heating devices 14 heat portions located closer to the ends of the glass tube G1, which is rotated by the rotation mechanisms 12 about the tube axis. Specifically, the glass tube G1 is heated over the entire circumference of the glass tube G1 at the portion that is to be melt-cut. After the heating partly softens the glass tube G1, the ends of the glass tube G1 are gripped by the gripping mechanisms 15 as shown in Figs. 6 and 9. The gripping mechanisms 15 stop rotation of the ends of the glass tube G1. In this state, the glass tube G1 is held by the holding mechanisms 13. Thus, the portion of the glass tube G1 located toward the central part from the ends continues to rotate at the same position. Hereinafter, the portion of the glass tube G1 located toward the central part from where melt-cutting is to be performed will be referred to as the main body of the glass tube G1.

When the rotation of the ends of the glass tube G1 is stopped, the softened parts of the glass tube G1 are twisted and deformed. Then, as shown in Figs. 7 and 10, the gripping mechanisms 15 gripping the ends of the glass tube G1 are moved by the movement mechanism 16 in directions pulling off the ends of the glass tube G1. In this case, the main body of the glass tube G1 is held by the holding mechanisms 13. This separates the ends of the glass tube G1 from the remaining portion of the glass tube G1, or the main body of the glass tube G1.

In the glass article manufacturing method, when the glass article manufacturing apparatus 11 is operated in the first operation as shown in Figs. 6 and 7, a glass article G2 shown in Fig. 8 is manufactured including open melt-cut end surfaces. In the first operation, air is blown from both ends of the glass tube G1 into the glass tube G1 in the melt-cutting step. Accordingly, blower gas VG continuously flows into and out of the glass tube G1. When the melt-cutting step is performed in a state in which the airflow is generated inside the glass tube G1, the glass deforms and opens the melt-cut end surfaces of the glass tube G1. This obtains the glass article G2 that includes an opening in a first end G2a and a second end G2b as shown in Fig. 8.

In the glass article manufacturing method, when the glass article manufacturing apparatus 11 is operated in the second operation as shown in Figs. 9 and 10, a glass article G3 shown in Fig. 11 is manufactured including closed melt-cut end surfaces. In the second operation, the melt-cutting step is performed while operation of the blower 17 is stopped. This obtains the glass article G3 that includes a closed part G3c in a first end G3a and a second end G3b. When manufacturing the glass article G3 including the closed part G3c in both ends, it is preferred that an air vent hole be formed in advance in the wall of the main body of the glass tube G1. This reduces the pressure inside the main body of the glass tube G1 in the melt-cutting step so that the end surfaces are smoothly closed.

The glass article G2, G3 is used as, for example, a medication container. Examples of a medication container include a syringe, a vial, and an ampule. The glass used for manufacturing a medication container is, for example, borosilicate glass. Furthermore, the glass article used for manufacturing a medication container includes a tubular portion having an outer diameter (outer diameter of glass tube G1), for example, in a range from 5 mm or greater to 75 mm or less and a wall thickness (wall thickness of glass tube G1), for example, in a range from 0.3 mm or greater to 3.0 mm or less. The application of the glass article G2, G3 is not limited to a medication container and may be, for example, a food container.

The operation and advantages of the present embodiment will now be described.
(1) The glass article manufacturing apparatus 11 includes the rotation mechanism 12 that rotates the glass tube G1 about the tube axis and the heating device 14 that heats a portion of the glass tube G1 located closer to the end of the glass tube G1, which is rotated by the rotation mechanism 12. The glass article manufacturing apparatus 11 further includes the gripping mechanism 15 that grips the end of the glass tube G1, which is heated by the heating device 14, the movement mechanism 16 that moves the gripping mechanism 15 back and forth in the tube-axis direction of the glass tube G1, and the blower 17 that blows air into the glass tube G1. The glass article manufacturing apparatus 11 melt-cuts the glass tube G1 by moving the gripping mechanism 15, which is gripping the end of the glass tube G1, with the movement mechanism 16 in the direction that pulls off the end of the glass tube G1. The glass article manufacturing apparatus 11 melt-cuts the glass tube G1 while the blower 17 is operating to form an opening in the melt-cut end surface of the glass tube G1.
   Specifically, the glass article manufacturing apparatus 11 is configured to be switchable between the first operation that forms an opening in the melt-cut end surface of the glass tube G1 and the second operation that closes the melt-cut end surface of the glass tube G1 by melt-cutting the glass tube G1 while operation of the blower 17 is stopped.
   This configuration forms an opening in the melt-cut end surface of the glass tube G1 by melt-cutting the glass tube G1 while the blower 17 is operating. Further, this configuration closes the melt-cut end surface of the glass tube G1 by melt-cutting the glass tube G1 while operation of the blower 17 is stopped. Therefore, the same apparatus can perform both the heat-processing that closes the melt-cut end surface and the heat-processing that opens the melt-cut end surface. In the first operation, the end surface having the opening is a fire-polished surface. Thus, the fire-polished surface can be obtained by a simple step compared to when, for example, the end surface is fire-polished after cutting the glass.
(2) The glass article manufacturing apparatus 11 of the present embodiment includes two blowers 17 that blow air into the glass tube G1 from both ends of the glass tube G1. This configuration generates airflows from the two open ends toward the central part of the glass tube G1 and from the central part toward the two open ends of the glass tube G1. Thus, an opening is appropriately formed in the melt-cut end surfaces of the glass tube G1 by the first operation using the blowers 17.
(3) The glass article manufacturing apparatus 11 includes two heating devices 14, two gripping mechanisms 15, and two movement mechanisms 16 to simultaneously heat-process the two ends of the glass tube G1. Thus, the two ends of the glass tube G1 are efficiently heat-processed.
(4) The glass article manufacturing apparatus 11 includes a structure that simultaneously heat-processes a plurality of glass tubes G1. This efficiently obtains the glass articles G2, G3.
(5) The gripping mechanism 15 of the glass article manufacturing apparatus 11 includes the support member 18 that supports the ends of the glass tubes G1 and the pressing member 19 that presses the glass tubes G1 toward the support member 18. The number of the pressing members 19 of the gripping mechanism 15 corresponds to the number of the glass tubes G1. In this case, the gripping mechanism 15 applies gripping force to each glass tube G1 with the corresponding pressing member 19. This limits, for example, the influence of the tolerance allowed for the radial dimension of each glass tube G1. Thus, the glass tubes G1 are stably gripped by the gripping mechanism 15.
(6) When a burner is used as the heating device 14 in the glass article manufacturing method, it is preferred that the distal end portion 14b of the fuel gas nozzle of the burner have a width W that is less than or equal to 25 mm. Further, it is preferred than the distal end portion 14b of the fuel gas nozzle have a projection length P that is greater than or equal to 3 mm.

This allows the gripping mechanism 15 to be located closer to the flame discharged from the fuel gas nozzle of the burner. Accordingly, the gripping mechanism 15 can grip the glass tube G1 at a position closer to the part where melt-cutting is to be performed. This shortens the length of the end of the glass tube G1 gripped by the gripping mechanism 15, that is, the excess length of the glass tube G1. In order to decrease the excess length of the glass tube G1, it is preferred that the gripping mechanism 15 grip the end of the glass tube G1 in a range where that the distance D from the distal end portion 14b of the burner is within 30 mm in the tube-axis direction. In this case, the distal end portion 14b of the fuel gas nozzle provides sufficient space for actuation of the gripping mechanism 15.

### Modified Examples

The present embodiment may be modified as follows. The present embodiment and the following modifications can be combined as long as the combined modifications remain technically consistent with each other.
- The heating device 14 of the glass article manufacturing apparatus 11 is not limited to a burner. Specifically, the heating device 14 may use, for example, a laser beam emitting device, a heating element that generates heat through resistive heating, or the like.
- The glass article manufacturing apparatus 11 is configured to simultaneously heat-process multiple glass tubes G1. Alternatively, the glass article manufacturing apparatus 11 may be configured to heat-process a single glass tube G1.
- The glass article manufacturing apparatus 11 is configured to simultaneously heat-process the first end G1a and the second end G1b of the glass tube G1. Alternatively, the glass article manufacturing apparatus 11 may be configured to heat-process only one of the first end G1a and the second end G1b of the glass tube G1.

Even when the glass article manufacturing apparatus heat-processes only one end of the glass tube G1, it is preferred that the blower 17 be arranged to blow air into the glass tube G1 from both ends of the glass tube G1. For example, when the first end G1a of the glass tube G1 is heat-processed, the blower gas VG flowing from the first end G1a of the glass tube G1 meets the blower gas VG flowing from the second end G1b of the glass tube G1 and then flows back out of the first end G1a of the glass tube G1. This readily generates an airflow in the first end G1a of the glass tube G1 from the opening in the first end G1a toward the central part of the glass tube G1 and from the central part toward the opening in the first end G1a of the glass tube G1. Thus, an opening is appropriately formed in the melt-cut end surface at the first end G1a.

The opening in the second end G1b of the glass tube G1 may be closed in advance by a closing member such as a cover, and the blower 17 may be arranged to blow air into the glass tube G1 from only the first end G1a of the glass tube G1. This also generates, in the first end G1a of the glass tube G1, an airflow directed toward the second end G1b and an airflow detected toward the first end G1a of the glass tube G1.
- The gripping mechanism 15 of the glass article manufacturing apparatus 11 may be rotated about the tube axis of the glass tube G1. When the gripping mechanism 15 is rotated, the glass tube G1 can be melt-cut by rotating the gripping mechanism 15 at an angular velocity differing from that of the glass tube G1 rotated by the rotation mechanism 12.
- The holding mechanism 13 of the glass article manufacturing apparatus 11 may be omitted.
- The glass tube G1 heat-processed by the glass article manufacturing apparatus 11 is not limited to the glass tube G1 that includes two open ends and may be a glass tube that includes only one open end. That is, the other end may be closed. In this case, in the first operation, the glass article manufacturing apparatus 11 can heat-process the glass tube that has one closed end to melt-cut the other end. Further, in the second operation, the glass article manufacturing apparatus 11 can heat-process the glass tube that has one closed end to close the other end. The glass tube does not have to be a straight tube and may be a curved tube including a curved part.

### DESCRIPTION OF REFERENCE CHARACTERS

11: glass article manufacturing apparatus; 12: rotation mechanism; 14: heating device; 14b: distal end portion; 15: gripping mechanism; 16: movement mechanism; 17: blower; 18: support member; 19: pressing member; D: distance; G1: glass tube; G2, G3: glass article; P: projection length; W: width.

## Claims

1. An apparatus for manufacturing a glass article obtained by heat-processing a glass tube that includes an opening in at least one of two ends, the apparatus comprising:
a rotation mechanism that rotates the glass tube about a tube axis;
a heating device that heats a portion of the glass tube located toward an end of the glass tube rotated by the rotation mechanism;
a gripping mechanism that grips the end of the glass tube heated by the heating device;
a movement mechanism that moves the gripping mechanism back and forth in a tube-axis direction of the glass tube; and
a blower that blows air into the glass tube, wherein
the glass tube is melt-cut by moving the gripping mechanism, which is gripping the end of the glass tube, with the movement mechanism in a direction that pulls off the end of the glass tube, and
the glass tube is melt-cut while the blower is operating to form an opening in a melt-cut end surface of the glass tube.

2. The apparatus for manufacturing a glass article according to claim 1, wherein the apparatus is configured to be switchable between a first operation that forms an opening in the melt-cut end surface of the glass tube, and a second operation that melt-cuts the glass tube while operation of the blower is stopped to close the melt-cut end surface of the glass tube.

3. The apparatus for manufacturing a glass article according to claim 1 or 2, wherein
the glass tube includes an opening in two ends, and
the blower is one of two blowers that blow air into the glass tube from the two ends of the glass tube.

4. The apparatus for manufacturing a glass article according to claim 3, wherein, to simultaneously heat-process the two ends of the glass tube, the heating device is one of two heating devices, the gripping mechanism is one of two gripping mechanisms, and the movement mechanism is one of two movement mechanisms.

5. The apparatus for manufacturing a glass article according to any one of claims 1 to 4, wherein the glass tube is one of a plurality of glass tubes, the apparatus comprising a structure that simultaneously heat-processes the glass tubes.

6. The apparatus for manufacturing a glass article according to claim 5, wherein
the gripping mechanism includes a support member that supports the ends of the glass tubes and a pressing member that presses the glass tubes toward the support member, and
the pressing member of the gripping mechanism includes pressing members respectively corresponding to the glass tubes.

7. The apparatus for manufacturing a glass article according to any one of claims 1 to 6, wherein the heating device is a burner including a fuel gas nozzle.

8. The apparatus for manufacturing a glass article according to claim 7, wherein the fuel gas nozzle of the burner includes a distal end portion having a width that is less than or equal to 25 mm.

9. The apparatus for manufacturing a glass article according to claim 8, wherein the distal end portion of the fuel gas nozzle of the burner has a projection length that is greater than or equal to 3 mm.

10. The apparatus for manufacturing a glass article according to any one of claims 7 to 9, wherein the gripping mechanism grips the end of the glass tube in a range where a distance from the distal end portion of the burner is within 30 mm in the tube-axis direction.

11. A method for manufacturing a glass article, the method using the apparatus for manufacturing a glass article according to any one of claims 1 to 10,
wherein the method obtains a glass article that includes an opening in a melt-cut end surface.

12. A method for manufacturing a glass article, the method using the apparatus for manufacturing a glass article according to any one of claims 1 to 10,
wherein the method obtains a glass article that includes a closed melt-cut end surface.
